# FASCICULE DE BREVET EUROPEEN

(11) **EP 3 144 569 B1**
(45) Date de publication et mention de la délivrance du brevet: **02.01.2019**
(21) Numéro de dépôt: 16188470.5
(22) Date de dépôt: 13.09.2016
(51) Int. Cl.: F16K 3/312, F16L 55/105, F16K 35/00

(54) **OBTURATEUR MOBILE POUR CANALISATION DE FLUIDE**
MOBILER VERSCHLUSS FÜR FLÜSSIGKEITSLEITUNG
MOBILE SHUTTER FOR FLUID PIPE

(30) Priorité: 18.09.2015 FR 1558837
(43) Date de publication de la demande: 22.03.2017
(73) Titulaire: ONIS, 13410 Lambesc (FR)
(72) Inventeur: RIVAS, Jérôme, 13350 CHARLEVAL (FR)
(74) Mandataire: GPI & Associés

(56) Documents cités:
- WO-A1-92/14957
- US-A- 2 462 494
- US-A- 3 613 720
- US-A- 3 738 610

## Description

La présente demande revendique la priorité de la demande française FR1558837 déposée le 18 septembre 2015.

L'invention concerne le domaine technique des équipements pour les réseaux de tuyauteries divers, notamment les installations de raffinage d'hydrocarbures, de traitement de gaz, ou encore d'installations pétrochimiques. Notamment, l'invention vise un obturateur mobile pour canalisation de fluide, une installation de traitement de fluides et un procédé d'obturation sécurisé d'un obturateur mobile pour canalisation de fluide.

### État de la technique.

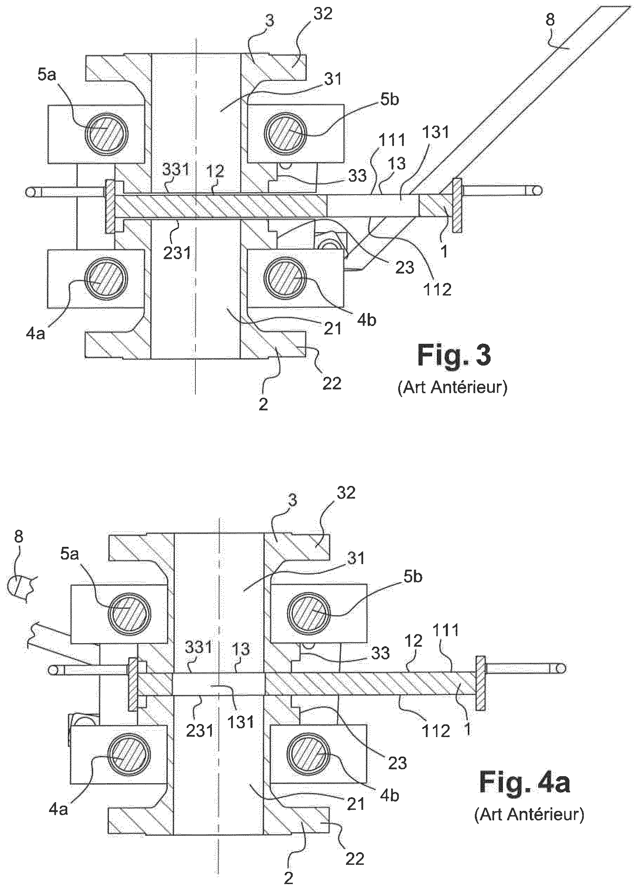

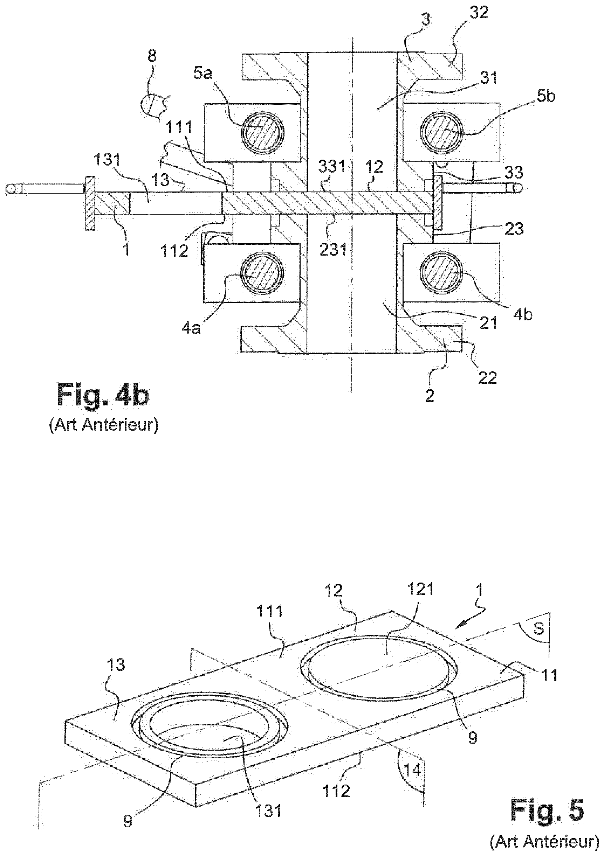

A ce jour, de nombreux obturateurs coulissants permettent d'équiper les canalisations de fluide de manière à pouvoir passer d'une position d'ouverture à une position de fermeture, ou inversement. Le document FR2733024 propose, par exemple, l'obturateur coulissant représenté sur les figures 1, 2, 3, 4a et 4b. Il se compose :
- de deux demi-corps 2, 3 associés à un mécanisme de verrouillage permettant de les rapprocher ou de les écarter l'un de l'autre. Chacun des demi-corps 2, 3 comporte un tube 21, 31 formant canalisation et autorisant le passage du fluide. Chacune des extrémités du tube 21, 31 est fixée respectivement à une bride 22, 32 et à un plateau 23, 33. Chaque plateau 23, 33 présente une face arrière raccordée au tube 21, 31, et une face d'appui 231, 331,
- d'un opercule 1 plat, représenté plus en détail sur la figure 5, monté mobile entre les faces d'appui 231, 331 des plateaux 23, 33. L'opercule 1 se compose d'un corps 11 divisé en deux parties symétriques par rapport au plan médian transversal 14. Le corps 11 présente deux faces planes longitudinales 111, 112 parallèles l'une à l'autre. La première partie 12 est une partie pleine qui, dans une position de fermeture (figure 4a), obture la canalisation de manière à interdire une circulation fluidique entre les deux demi-corps 2, 3. Des aménagements 121 sont prévus sur chacune des faces longitudinales 111, 112, lesquels aménagement sont adaptés pour s'aligner avec les tubes 21, 31 lorsque l'obturateur 1 est en position de fermeture. La deuxième partie 13 est une partie percée par une ouverture 131 débouchant au niveau de chacune des faces longitudinales 111, 112. En position d'ouverture (figure 4b), la partie percée (13) est placée au centre de la canalisation, alignée avec les tubes 21, 31, de manière à autoriser une circulation fluidique entre les deux demi-corps (2, 3).

Le mécanisme de verrouillage est composé de quatre chapes 6a, 6b, 6c, 6d, parallèles à l'axe des demi-corps 2, 3, et s'articulant sur ces dernières par l'intermédiaire de :
- deux arbres moteurs 4a, 4b fixés sur un premier demi-corps 2,
- deux arbres récepteurs 5a, 5b fixes fixés sur le deuxième demi-corps 3.

La rotation des arbres moteurs 4a, 4b, provoque le rapprochement ou l'écartement des demi-corps 2, 3. La rotation simultanée des deux arbres moteurs 4a, 4b est assurée grâce à deux manivelles solidaires de l'une des extrémités de chacun des arbres 4a, 4b. Les manivelles sont reliées entre elles par une biellette 7. Un levier 8, solidaire de l'une des manivelles, permet d'effectuer le mouvement de rotation.

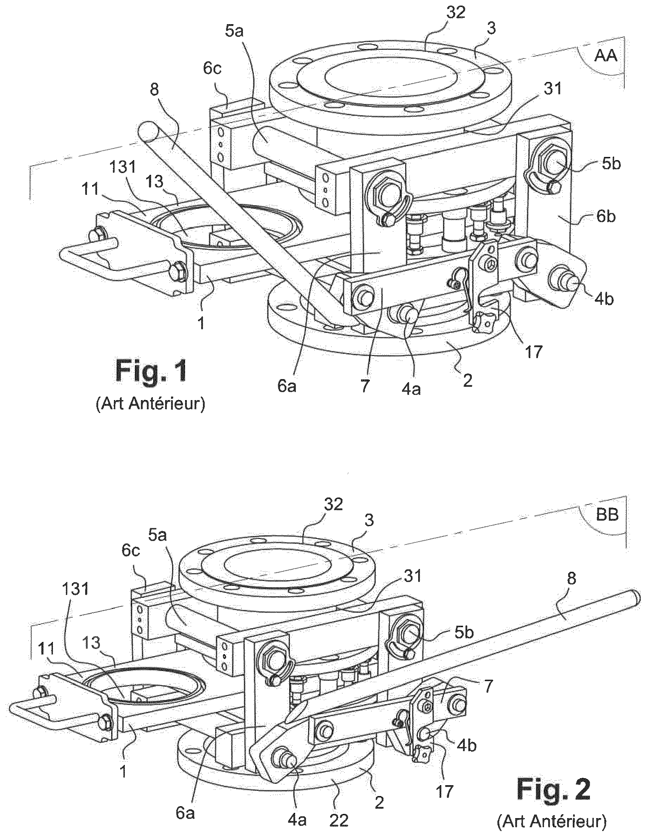

Le mécanisme de verrouillage est adapté pour pouvoir passer les demi-corps 2, 3 d'une position écartée à une position rapprochée. Sur les figures 1 et 3, le mécanisme de verrouillage maintient les plateaux 23, 33 dans une position écartée où la face d'appui 231, 331 desdits plateaux est espacée de la face longitudinale 111, 112 respective de l'opercule 1. Cette configuration autorise le déplacement de l'opercule 1 entre les positions de fermeture et d'ouverture.

Après actionnement du mécanisme de verrouillage, les demi-corps 2, 3 se retrouvent dans la position rapprochée schématisée sur les figures 2, 4a et 4b. Dans cette position rapprochée, les faces d'appui 231, 331 enserrent de manière étanche le corps 11 pour bloquer l'opercule 1 en position d'ouverture ou de fermeture. Les faces d'appui 231, 331 viennent chacune en contact serré avec la face longitudinale 111, 112 respective de l'opercule 1. La figure 4a schématise le cas où l'opercule 1 se trouve en position de fermeture, alors que la figure 4b représente le cas où l'opercule 1 est en position d'ouverture.

Le document FR2733024 présente également des joints d'étanchéité 9 disposées sur les deux faces longitudinale 111, 112 de l'opercule 1. Ces joints 9 sont placés autour de l'ouverture 131 et autour des aménagements 121.

L'obturateur mobile décrit précédemment présente l'inconvénient de ne présenter aucune méthode permettant de vérifier le bon positionnement de l'opercule entre les deux plateaux. En effet, un mauvais positionnement peut avoir des conséquences graves sur l'installation, provoquant des fuites de fluide et mettant en danger les opérateurs.

Le document WO9214957 présente un obturateur mobile permettant d'éviter certains des inconvénients précités. Il propose un système permettant de sécuriser le positionnement de l'opercule. Ce système est constitué d'un doigt de verrouillage pouvant s'enfoncer dans deux perçages réalisés dans les faces latérales du corps de l'opercule, la position de ces perçages correspondant respectivement à la position d'ouverture et à la position de fermeture de l'obturateur. Ce système de sécurité empêche de déplacer l'opercule tant que les demi-corps ne sont pas totalement desserrés en position écartée. Toutefois, un tel système est compliqué à mettre en place puisque les perçages dans l'opercule doivent être effectués dans des positions bien précises. De plus l'installation et l'utilisation du doigt de verrouillage sont complexes, l'opérateur devant introduire correctement celui-ci dans le bon perçage.

D'autres documents ont été considérés, à savoir les documents US3738610, US2462494 et US3613720.

Le document US3738610 décrit une soupape d'actionnement à robinet pivotant biface. Une bride s'étend axialement sur un anneau qui définit une rainure sur deux côtés de l'anneau. Une bague de matériau d'étanchéité flexible est fixée dans l'anneau. Une portion de l'anneau en regard de bagues souples d'étanchéité comprend des bourrelets annulaires ayant chacun un sommet et dont les côtés sont inclinés vers la surface plane de l'anneau correspondant. Des surfaces planes d'étanchéité de la bride peuvent être engagées contre des surfaces planes similaires étanchéité sur la bague de siège fixée à chaque corps de vanne en vue d'assurer l'étanchéité.

Le document US2462494 décrit un raccord de pipeline, avec des moyens d'étanchéité pourvus d'épaulements annulaires périphériques sur des faces planes internes. Les épaulements annulaires périphériques coopèrent avec des sections de corps en vue d'assurer l'étanchéité. Le raccord de pipeline comporte une pièce formant plaque à ouverture et voile d'obturation, qui est basculable et pivotante.

Le document US3613720 décrit une vanne à trappe basculante, dont une portion formant volet de valve présente un membre battant avec un joint d'étanchéité à languettes qui assurent un alignement adéquat entre un siège de corps de vanne et un assemblage de connexion par engagement.

L'invention vise à remédier aux limitations des obturateurs mobiles connus. En particulier, un objectif de l'invention est de proposer un obturateur mobile permettant de s'assurer de manière aisée que l'opercule est correctement positionné.

Un autre objectif de l'invention est de proposer un obturateur mobile dont la fabrication et l'installation sont simplifiées, limitant ainsi les coûts de revient.

Encore un autre objectif de l'invention est de proposer un obturateur mobile permettant de passer aisément d'une position de fermeture à une position d'ouverture, ou inversement.

### Divulgation de l'invention.

La solution proposée par l'invention est un obturateur mobile pour canalisation de fluide comportant :
- deux demi-corps agencés de manière à former une canalisation de fluide, lesdits demi-corps étant chacun formés d'un tube formant canalisation et aux extrémités duquel sont fixés respectivement une bride et un plateau, chacun desdits plateaux présentant une face d'appui,
- un opercule se présentant sous la forme d'un corps délimité par deux faces longitudinales planes opposées disposées chacune respectivement en vis-à-vis de la face d'appui des plateaux, lequel opercule présente une partie pleine et une partie percée par une ouverture débouchant au niveau de chacune desdites faces longitudinales, lequel opercule est monté mobile entre les faces d'appui entre :
   - une position de fermeture où la partie pleine obture la canalisation de manière à interdire une circulation fluidique entre les deux demi-corps,
   - une position d'ouverture où la partie percée est placée au centre de la canalisation de manière à autoriser une circulation fluidique entre les deux demi-corps,
- un mécanisme de verrouillage adapté pour maintenir les plateaux dans :
   - une position écartée où la face d'appui des plateaux est espacée de la face longitudinale respective de l'opercule de manière à autoriser le déplacement dudit opercule entre les positions de fermeture et d'ouverture,
   - une position rapprochée où les faces d'appui enserrent de manière étanche le corps de l'opercule pour bloquer ledit opercule en position d'ouverture ou de fermeture, lesdites faces d'appui venant chacune en contact serré avec la face longitudinale respective de l'opercule,

Cette invention est remarquable en ce qu'au moins un élément en relief, par exemple en saillie est aménagé sur la face d'appui d'au moins un plateau ou sur au moins une des faces longitudinales du corps de l'opercule, lequel élément en saillie est aménagé de sorte que si l'opercule n'est pas correctement positionné dans la position de fermeture ou dans la position d'ouverture, ledit élément en saillie forme un obstacle qui maintient éloignée la face d'appui d'au moins un plateau et la face longitudinale respective, de sorte que le mécanisme de verrouillage ne peut pas maintenir les plateaux dans la position rapprochée.

Un tel dispositif permet à l'opérateur de s'assurer que l'opercule est dans la position souhaitée. En effet, que ce soit dans la position d'ouverture ou de fermeture, un bon alignement de l'opercule avec les tubes des demi-corps, est nécessaire afin d'éviter toute fuite de fluide éventuelles. Grâce à l'invention, l'opérateur ne peut plus manoeuvrer complètement le mécanisme de verrouillage tant que l'opercule n'est pas correctement positionné.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- l'élément en saillie peut être aménagé sur au moins une des faces longitudinales du corps de l'opercule, lequel élément en saillie est localisé entre la partie pleine et la partie percée dudit corps, de sorte que si ledit opercule est positionné de manière à ce que ledit élément en saillie soit situé dans l'espacement entre les deux faces d'appui des plateaux, alors ledit élément en saille maintient un espacement entre la face longitudinale sur lequel il est disposé et la face d'appui respective ;
- l'élément en saillie peut être aménagé sur au moins une des faces longitudinales du corps de l'opercule, ledit élément en saillie étant configuré de sorte que dans la position rapprochée, l'espacement entre les deux faces d'appuis des plateaux soit inférieure à l'épaisseur combinée dudit corps et dudit élément en saillie ;
- un élément en saillie peut être est aménagé sur chacune des deux faces longitudinales du corps de l'opercule ;
- l'élément en saillie peut être positionné au milieu du corps de l'opercule ;
- l'élément en saillie peut être symétrique par rapport au plan médian longitudinal du corps de l'opercule ;
- l'élément en saillie est symétrique par rapport au plan médian transversal du corps de l'opercule ;
- l'élément en saillie peut présenter une forme en sablier ayant deux cotés droits parallèles aux bords longitudinaux du corps de l'opercule, lesquels côtés droits sont reliés pas deux cotés incurvés ;
- l'élément en saillie peut se présenter sous la forme d'une nervure transversale s'étendant dans toute la largeur du corps de l'opercule, ou sensiblement dans toute la largeur dudit corps ;
- l'élément en saillie peut se présenter sous la forme de plusieurs nervures alignées transversalement les unes par rapport aux autres, dans la largeur du corps de l'opercule ;
- l'élément en saillie peut se présenter sous la forme d'une nervure transversale située au milieu du corps, ladite nervure ayant une longueur inférieure à la largeur du corps ;
- l'élément en saillie et le corps de l'opercule peuvent se présenter sous la forme d'une pièce monobloc ;
- l'élément en saillie peut être rapporté sur le corps de l'opercule, lequel élément en saillie est maintenu en position sur ledit corps par l'intermédiaire de moyens de fixation ;
- l'élément en saillie peut être aménagé sur la face d'appui d'au moins un des plateaux, un logement de forme correspondante audit élément en saillie étant aménagé sur la face longitudinale respective du corps de l'opercule, de manière à ce que si ledit élément en saillie n'est pas positionné dans ledit logement, alors ledit élément en saillie forme l'obstacle ;
- l'élément en saillie et le plateau sur la face d'appui duquel il est aménagé peuvent se présenter sous la forme d'une pièce monobloc ;
- l'élément en saillie peut être rapporté sur la face d'appui du plateau, lequel élément en saillie est maintenu en position sur ladite face d'appui par l'intermédiaire de moyens de fixation ;
- l'élément en saillie peut avoir une épaisseur comprise entre 0.5 mm et 5 mm.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée est une représentation schématique d'un obturateur de l'art antérieur, les brides étant en position écartée,
- la figure 2 précitée est une représentation schématique de l'obturateur de la figure 1, les brides étant en position rapprochée,
- la figure 3 précitée est une vue en coupe selon AA d'un obturateur selon les figures 1 et 2, l'opercule étant en position de fermeture,
- la figure 4a précitée est une vue en coupe selon BB d'un obturateur selon les figures 1 et 2, l'opercule étant en position d'ouverture,
- la figure 4b précitée est une vue en coupe selon BB d'un obturateur selon les figures 1 et 2, l'opercule étant en position de fermeture,
- la figure 5 précitée est une représentation schématique d'un opercule utilisé dans l'obturateur de la figure 1,
- les figures 6a, 6b et 6c sont des représentations schématiques d'installation de traitement de fluides et d'opercules conformes à l'invention,
- les figures 7a à 7d sont des variantes de réalisation de l'opercule de la figure 6a,
- la figure 8 est une représentation schématique d'un obturateur conforme à l'invention, les demi-corps étant en position écartée,
- la figure 9a est une représentation schématique de l'obturateur de la figure 8, les demi-corps étant en position rapprochée, l'opercule de la figure 6a étant en position d'ouverture,
- la figure 9b est une représentation schématique de l'obturateur de la figure 8, les demi-corps étant en position rapprochée, l'opercule de la figure 6a étant en position de fermeture,
- la figure 10 est une représentation schématique de l'obturateur de la figure 8, l'opercule de la figure 6a n'étant pas correctement positionné,
- la figure 11 est une représentation schématique d'un obturateur conforme à l'invention, les demi-corps étant en position écartée,
- la figure 12a est une représentation schématique de l'obturateur de la figure 11, les demi-corps étant en position rapprochée, l'opercule de la figure 6c étant en position d'ouverture,
- la figure 12b est une représentation schématique de l'obturateur de la figure 11, les demi-corps étant en position rapprochée, l'opercule de la figure 6c étant en position de fermeture,
- la figure 13 est une représentation schématique de l'obturateur de la figure 11, l'opercule de la figure 6c n'étant pas correctement positionné,
- la figure 14 est une représentation schématique d'un obturateur pivotant selon l'invention, déplaçable suivant une trajectoire curviligne en ses positions ouverte et fermée, dont l'opercule mobile et / ou le corps possède au moins un élément en relief de détrompage assurant en outre, un passage d'une position à l'autre que si l'espacement entre deux demi-corps est suffisant.

### Modes préférés de réalisation de l'invention.

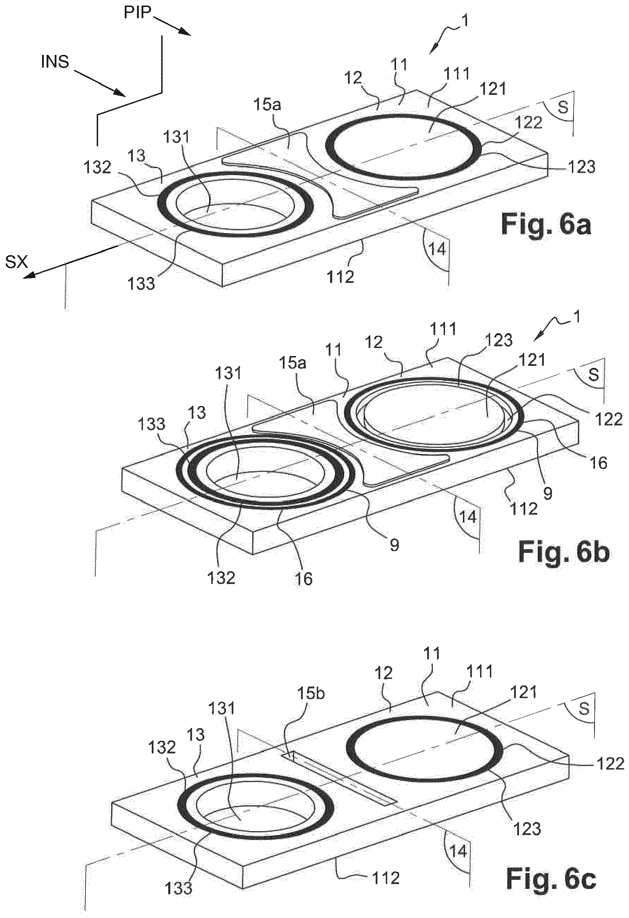

Sur la figure 6a, et montrée une installation INS de traitement de fluides selon l'invention. L'installation INS comporte au moins une canalisation de fluide PIP qui est pourvue d'au moins un obturateur mobile 1.

L'obturateur mobile objet de l'invention est similaire à celui déjà présent dans l'état de la technique et décrit précédemment en référence aux figures 1, 2, 3, 4a et 4b. L'invention réside dans la forme sous laquelle se présente l'opercule 1, ou la face d'appui 231, 331 des plateaux 23, 33, cette forme permettant de s'assurer que celui-ci est correctement positionné en empêchant le mécanisme de verrouillage de maintenir les demi-corps 2, 3 en position rapprochée, et ainsi éviter tout risque de fuite de fluide.

Lors de l'installation de l'obturateur, les brides 22, 32 de chacun des demi-corps 2, 3 sont raccordées à la canalisation de fluide de manière à ce que celle-ci s'aligne avec les tubes 21, 31. Les brides 22, 32 sont alors solidarisées à la canalisation grâce à des moyens de fixation comme des boulons, des soudures, ou encore des vis. En position écartée, chacune des faces d'appui 231, 331 des plateaux 23, 33 est en vis-à-vis de la face longitudinale 111, 112 respective de l'opercule 1, lorsque celui-ci est glissé dans l'espacement entre les deux demi-corps 2, 3.

Un opercule 1 conforme à l'invention est représenté sur les figures 6a, 6b et 6c. Il comporte un corps 11 se présentant de préférence sous la forme d'un parallélépipède rectangle, mais peut être sous d'autres formes comme par exemple un cube, ou encore tout autre parallélépipède. Il est réalisé dans un matériau rigide et étanche tel que l'aluminium, l'acier inoxydable, ou encore un plastique. Le corps 11 de l'opercule a une largeur pouvant être comprise entre 4 cm et 65 cm, une longueur variant entre 15 cm et 300 cm, et une épaisseur pouvant aller de 1 cm à 15 cm.

L'opercule 1 est divisé en deux parties 12, 13 symétriques par rapport au plan médian transversal 14 et alignées l'une par rapport à l'autre sur le plan sagittal S du corps 11. La première partie 12, encore appelée partie pleine, présente un aménagement 121 de forme circulaire, qui se retrouve préférentiellement sur les deux faces longitudinales 111, 112. Cet aménagement 121 est entouré d'une gorge circulaire 122. Cette dernière a une profondeur variant de 0.3 cm à 2 cm et une largeur pouvant varier, par exemple, de 0.3 cm à 2 cm. Les dimensions de l'aménagement 121 correspondent à la section des tubes 21, 31. Le diamètre de l'aménagement 121 est, par exemple, compris entre 2 cm et 40 cm.

La deuxième partie 13, encore appelée partie percée, présente une ouverture 131 ayant une forme équivalente à celle de l'aménagement 121. L'ouverture 131 est entourée d'une gorge circulaire 132 possédant les mêmes dimensions que la gorge 122.

Des joints annulaires 123 et 133 sont introduits respectivement dans les gorges 122 et 132. Ces joints 123, 133 peuvent avoir une section circulaire, mais peuvent également avoir une section rectangulaire ou encore triangulaire. Ils sont préférentiellement fabriqués dans un matériau souple tel que le caoutchouc, le caoutchouc fluoré, le polyéthylène mais peuvent aussi être réalisés en graphite, en silicone ou encore en polyuréthane. Préférentiellement, ils ont une épaisseur sensiblement supérieure à la profondeur des gorges 122, 132, de manière à dépasser et permettre d'obtenir une meilleure étanchéité lorsque les faces d'appui 231, 331 des plateaux 23, 33 viennent en contact avec les faces longitudinales 111, 112 respectives de l'opercule 1 lorsque lesdits plateaux sont en position rapprochée. Cette épaisseur est, par exemple, comprise entre 3 mm et 25 mm.

Dans le mode de réalisation représenté sur la figure 6b, l'opercule 1 présente également d'autres gorges 16 concentriques aux gorges circulaires 122, 132. Ces gorges 16 sont circulaires et ont un diamètre sensiblement supérieur à celui des gorges 122, 132. Ce diamètre est compris entre 8 cm et 110 cm. Ces gorges 16 sont préférentiellement réalisées sur les deux faces longitudinales 111, 112 de l'opercule 1, mais peuvent être présentes sur une seule desdites faces. Ces gorges 16 permettent d'installer, de façon temporaire ou permanente, des joints annulaires 9 adaptés pour rendre le système étanche au feu. Ces joints 9 sont fabriqués dans un matériau non inflammable, comme par exemple le graphite.

Toutes les gorges 122, 132, 16 sont formées d'un fond et d'une ouverture, reliés par des parois latérales. Elles peuvent, par exemple, avoir une section en U ou en C, le fond et l'ouverture ayant les mêmes dimensions. Elles peuvent toutefois avoir une forme dans laquelle l'ouverture est moins large que le fond, de manière à ce qu'une fois inséré en force, leur joint ne puisse pas ressortir accidentellement.

Dans les modes de réalisation, au moins un élément en relief de détrompage appelé élément en saillie 15a, 15b en matériau rigide est aménagé sur au moins une face d'appui 231, 331 d'au moins un plateau 23, 33 ou sur au moins une des faces longitudinales 111, 112 du corps 11 de l'opercule 1.

Chaque élément en saillie 15a, 15b est configuré pour que dans la position rapprochée, l'espacement entre les deux faces d'appuis 231, 331 des plateaux 23, 33 soit inférieur à l'épaisseur combinée du corps 11 et de l'élément en saillie 15a, 15b.

De la sorte, si l'opercule 1 n'est pas correctement positionné dans l'espacement entre les deux demi-corps 2, 3 en position de fermeture ou dans la position d'ouverture, l'élément en saillie 15a, 15b forme un obstacle qui empêche le rapprochement alors indésirable des faces d'appui et longitudinale respectives, et opère un blocage des plateaux 23, 33 inhibant la mise en position rapprochée et l'enserrement étanche le corps 11.

L'opercule 1 est par exemple équipé d'un dispositif de sécurité de positionnement qui se compose d'au moins un élément en saillie 15a, 15b aménagé sur au moins une des faces longitudinales 111, 112 du corps 11 de l'opercule 1 ou sur la face d'appui (231, 331) d'au moins un plateau (23, 33). Plusieurs modes de réalisation du dispositif de sécurité de positionnement vont maintenant être décrits en détail.

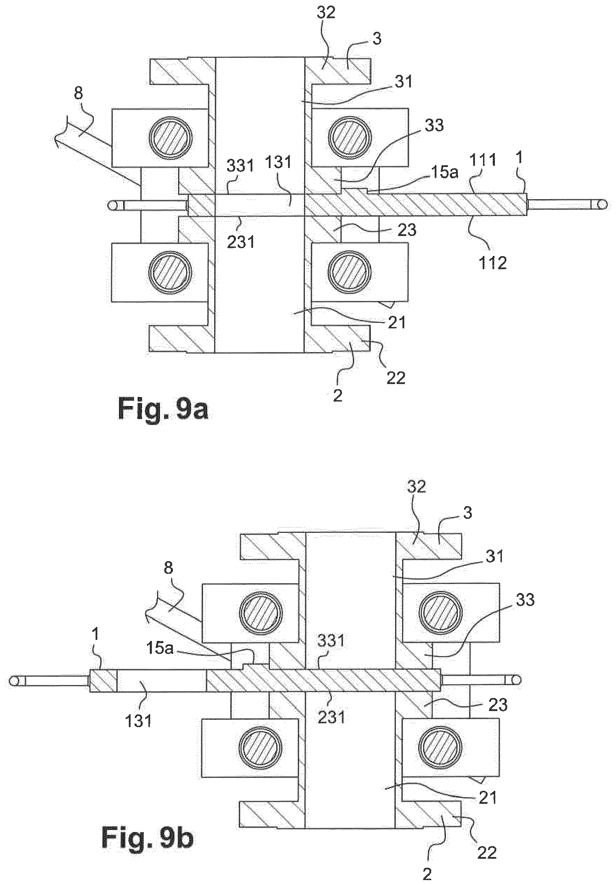

En position de fermeture (e.g. figure 9a), l'opercule mobile 1 obture la canalisation de manière à interdire une circulation fluidique entre les deux demi-corps. En position d'ouverture (e.g. figure 9b), la partie percée 13 est placée au centre de la canalisation, alignée avec les tubes 21, 31, de manière à autoriser une circulation fluidique entre les deux demi-corps 2, 3.

### Premier mode réalisation (figures 6a-6b, 7a-7d, 8, 9a-9b et 10)

Dans les modes de réalisation des figures 6-10, l'opercule 1 est monté coulissant suivant une direction de translation rectiligne SX (figure 6a) qui est parallèle au plan médian longitudinal S ainsi qu'aux faces longitudinales 111, 112 du corps 11. La direction de translation rectiligne SX est également perpendiculaire au plan médian transversal 14.

C'est donc suivant la direction de translation rectiligne SX que l'opercule coulissant 1 est déplaçable i.e. mobile entre les faces d'appui 231, 331, par translation rectiligne, c'est-à-dire glissement droit linéaire, dans l'espacement entre les deux demi-corps 2, 3.

Dans ce mode de réalisation, l'élément en saillie 15a est aménagé sur au moins une des faces longitudinales 111, 112 du corps 11 de l'opercule 1. Un élément en saillie 15a peut toutefois être aménagé sur chacune des deux faces longitudinales 111, 112.

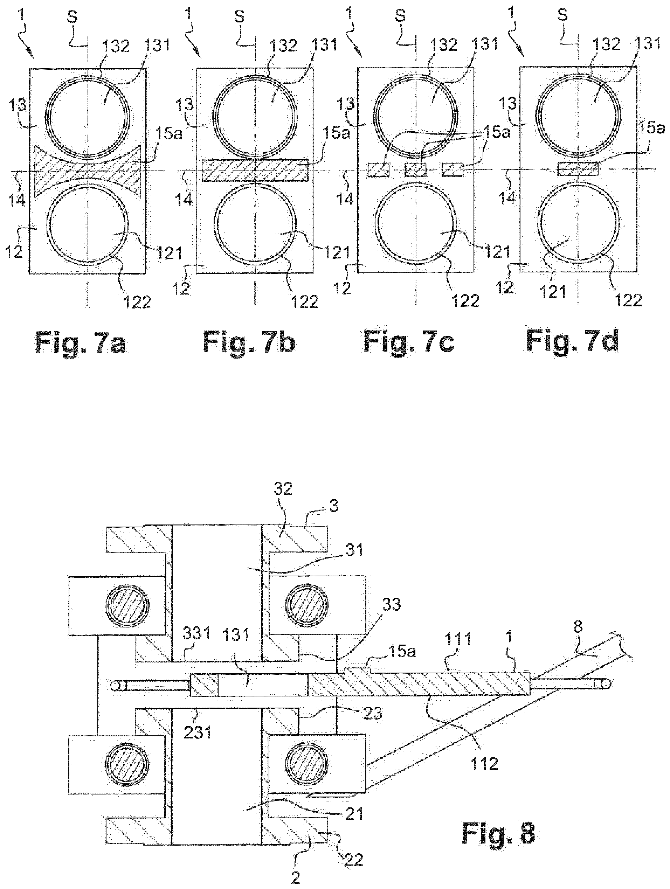

L'élément en saillie 15a est localisé entre la partie pleine 12 et la partie percée 13. Il est avantageusement placé au milieu du corps 11, symétriquement par rapport au plan médian transversal 14 et de manière optionnelle par rapport au plan médian longitudinal S, et peut se présenter sous des formes diverses. Les figures 7a à 7d présentent différents exemples d'éléments en saillie 15a. Celui-ci peut se présenter sous la forme d'un sablier (figure 7a). Dans cette configuration, l'élément 15a présente deux cotés droits 151a, 152a parallèles au plan sagittal S (ou plan médian longitudinal) du corps 11. Ces cotés droit 151a, 152a sont reliés par des cotés incurvés 153a, 154a. Ces derniers suivent, par exemple, la forme des parties pleine 12 et percée 13, ou encore la forme des plateaux 23, 33, ce qui permet de faciliter le positionnement correct de l'opercule.

L'élément en saillie 15a peut également se présenter sous des formes différentes. Il peut par exemple, se présenter sous la forme d'une nervure transversale (figures 7b et 7d) s'étendant dans tout ou partie de la largeur du corps 11. Cette nervure pouvant se présenter sous différentes formes, comme par exemple un parallélépipède rectangle ou encore un cube. Elle peut avoir une longueur inférieure à la largeur du corps 11 (figure 7d) ou encore avoir une longueur égale à la largeur du corps 11. Dans le mode de réalisation préféré représenté sur la figure 7b, la longueur de la nervure correspond sensiblement à la largeur du corps 11. On entend par « sensiblement », le fait que la longueur de la nervure peut être inférieure de quelques millimètres à la largeur du corps 11.

Sur la figure 7c, l'élément en saillie 15a se présentant sous la forme de plusieurs nervures alignées transversalement les unes par rapport aux autres, dans la largeur du corps 11. La figure 7c montre trois nervures, mais l'opercule 1 peut en comporter un nombre différent, pouvant varier de 2 à 15. Ces nervures sont alignées transversalement et disposées au milieu du corps 11.

L'épaisseur de l'élément en saillie 15a varie de 0.5 mm à 20 mm, préférentiellement de 0.5 mm à 5 mm, sa longueur est comprise entre 2 cm et 65 cm, et sa largeur peut varier de 0.5 cm à 10 cm.

Dans les réalisations des figures 6a-c et 7a-b par exemple, la largeur de l'élément en saillie 15a est au moins égale au diamètre des ouvertures 131 ou de l'aménagement 121 formant voile.

L'élément en saillie 15a et le corps 11 peuvent se présenter sous la forme d'une pièce monobloc, en utilisant par exemple un procédé de moulage, d'estampage, ou d'usinage. Il peut également être rapporté ultérieurement sur le corps 11, grâce à des moyens de fixation tels que de la colle, des soudures, ou encore des vis. Cette solution en deux parties permet l'utilisation de matériaux différents pour le corps 11 et pour l'élément en saillie 15a. Ce dernier peut par exemple être fabriqué dans un matériau plus rigide que celui utilisé pour le corps 11.

L'élément en saillie 15a est symétrique par rapport au plan médian transversal 14 de manière à ce qu'il soit à équidistance de la partie pleine 12 et de la partie percée 13.

La figure 8 illustre l'obturateur en position écartée, les deux demi-corps 2, 3 étant espacés l'un de l'autre. Dans cette position écartée, l'opercule 1 est libre de se déplacer dans l'espacement qui existe entre les deux plateaux 23, 33, de la position d'ouverture à la position de fermeture ou inversement. Dans cette position écartée, l'espacement entre les deux faces d'appuis 231, 331 des plateaux 23, 33 est supérieur à l'épaisseur combinée du corps 11 et de l'élément en saillie 15a, ce qui autorise le déplacement de l'opercule 1. La face d'appui 231, 331 de chacun des plateaux 23, 33 se trouve en vis-à-vis de la face longitudinale 111, 112 respective de l'opercule 1.

Les figures 9a et 9b illustre l'obturateur avec les plateaux 23, 33 en position rapprochée, après que l'opercule 1 ait été positionné dans la position de fermeture (« blocage du fluide » ; figure 9b) ou dans la position d'ouverture (« passage du fluide » ; figure 9a).

Sur la figure 9a, l'obturateur 1 est en position d'ouverture, les faces d'appui 231, 331 des plateaux 23, 33 viennent respectivement en contact avec chacune des faces longitudinales 111, 112 de l'opercule 1 de manière à ce que l'ouverture 131 soit coaxiale aux tubes 21, 31, au centre de la canalisation. Cette configuration permet un raccordement étanche de la canalisation de fluide entre les deux demi-corps 2, 3.

Sur la figure 9b, l'obturateur 1 est en position de fermeture, l'aménagement 121 étant coaxiale aux tubes 21, 31. Les faces d'appui 231, 331 viennent respectivement en contact avec les faces longitudinales 111, 112 du corps 11 pour le bloquer en position. Cette configuration empêche toute communication fluidique entre les deux demi-corps 2, 3.

Le mécanisme de verrouillage est utilisé afin de rapprocher les plateaux 23, 33 et bloquer l'opercule 1 en position entre les deux faces d'appui 231, 331. Les figures 9a et 9b montrent le cas où l'opercule 1 a été correctement positionné, l'ouverture 131 et l'aménagement 121 étant respectivement coaxiaux aux tubes 21, 31. Ce n'est que lorsque l'opercule 1 est correctement positionné, que le mécanisme de verrouillage est verrouillé et peut maintenir les demi-corps 2, 3 en position rapprochée.

Le mécanisme de verrouillage, connu de l'état de la technique, peut par exemple se présenter sous la forme d'un loquet 17 (représenté sur les figures 1 et 2). Il peut aussi se présenter sous la forme d'un système venant bloquer le levier 8 après avoir fait effectuer à celui-ci le mouvement de rotation permettant de rapprocher les demi-corps 2, 3. Dans cette configuration, l'espacement entre les deux faces d'appui 231, 331 correspond à l'épaisseur du corps 11, mais reste inférieure à l'épaisseur combinée dudit corps et de l'élément de saillie 15a. Ainsi, lorsque l'obturateur est en position rapprochée et que l'opercule est positionné correctement, l'élément en saillie 15a se trouve à l'extérieur de l'espacement entre deux faces d'appui 231, 331.

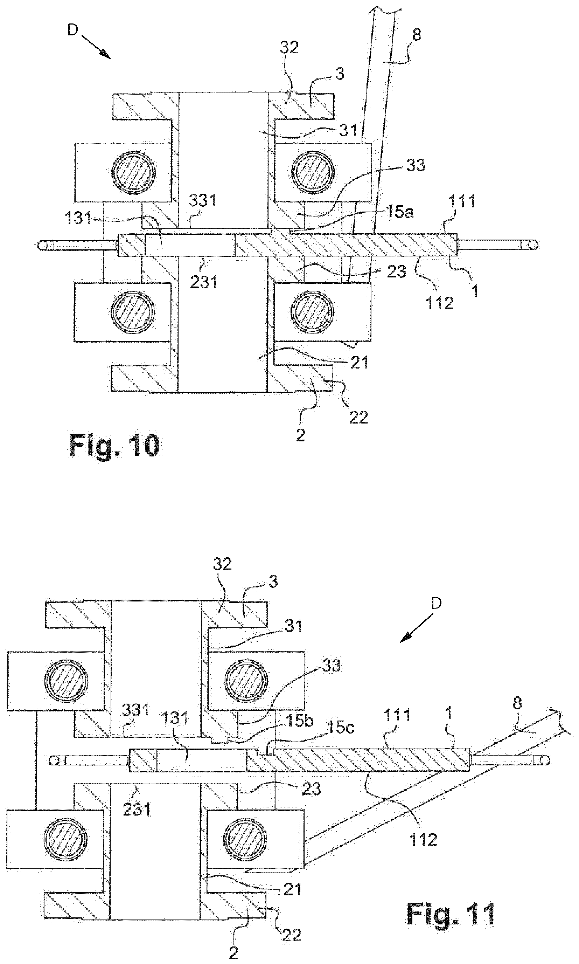

La figure 10 montre le cas où l'opercule 1 est mal positionné. En effet, l'élément de saillie 15a se trouve dans l'espacement entre deux faces d'appui 231, 331 et empêche les plateaux 23, 33 d'atteindre leur position rapprochée. Ainsi, l'opercule 1 n'est pas enserré entre les faces d'appui 231, 331, l'espacement entre lesdites faces d'appui étant supérieur à l'épaisseur du corps 11. Le mécanisme de verrouillage ne peut alors pas être verrouillé et maintenir les plateaux 23, 33 en position rapprochée. L'opérateur ne peut donc pas fermer l'obturateur tant que l'opercule 1 n'est pas déplacé jusqu'à ce que l'élément de saillie 15a se trouve à l'extérieur de l'espacement entre les faces d'appui 231, 331. L'utilisation de l'obturateur n'est pas possible tant que l'opercule 1 n'est pas dans la position souhaitée, empêchant par conséquent des fuites éventuelles.

### Second mode réalisation (figures 6c, 11, 12a, 12b et 13)

Dans ce mode de réalisation, l'élément en saillie 15b est aménagé sur la face d'appui 231, 331 d'au moins un des plateaux 23, 33. Un élément en saillie 15b peut toutefois être aménagé sur chacune des deux faces d'appui 231, 331.

Cet élément en saillie 15b coopère avec un logement 15c aménagé sur la face longitudinale respective du corps 11 (figure 6c).

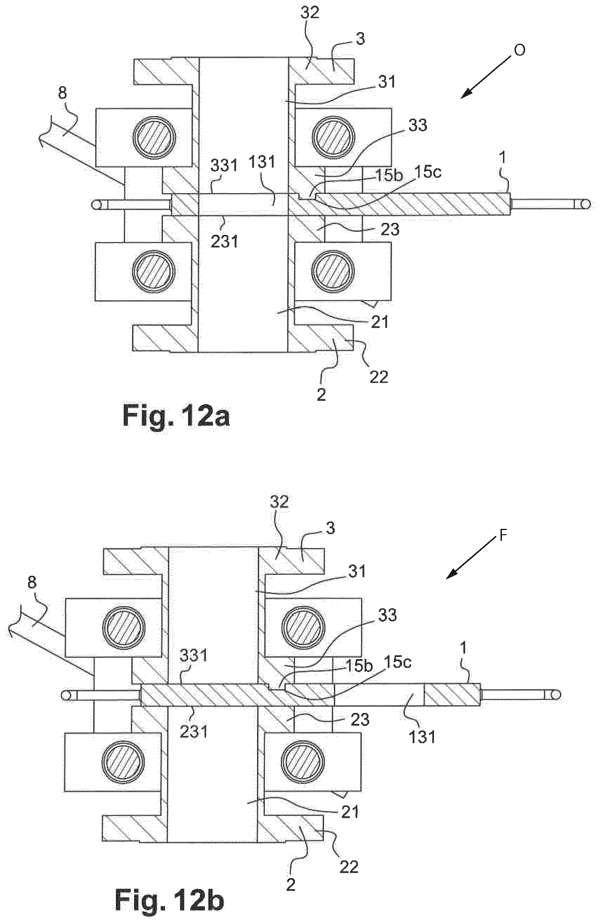

En position d'ouverture fermeture (figure 12a), chaque élément en saillie 15b est placé et effacé dans un logement 15c correspondant et de forme sensiblement complémentaire, ce qui permet le rapprochement des corps 2, 3. En position de fermeture (figure 12b), chaque élément en saillie 15b est placé et effacé dans un logement 15c correspondant et de forme sensiblement complémentaire, permettant aussi le rapprochement des corps 2, 3. En position de défaut (figure 11), chaque élément en saillie 15b est placé en regard d'une face (111, 112) à distance du logement 15c complémentaire, rendant quasiment impossible le rapprochement des corps 2, 3.

Dans le mode de réalisation illustré sur les figures 11, 12a, 12b et 13, l'élément en saillie 15b est positionné sur la face d'appui 331 du plateau 33. Le logement 15c est aménagé sur la face longitudinale 111 se trouvant en vis-à-vis la de la face d'appui 331. On comprend aisément que l'élément en saillie 15b puisse être positionné sur la face d'appui 231 du plateau 23, le logement 15c se trouvant alors sur la face longitudinale 112 correspondante. Des éléments en saillie 15b peuvent également être aménagés sur chacune deux faces d'appui 231, 331, des logements 15c correspondants se trouvant donc sur chacune des faces longitudinales 111, 112 de l'opercule 1.

L'élément en saillie 15b est similaire à l'élément 15a décrit précédemment en référence au premier mode de réalisation, et peut avoir les mêmes formes et dimensions que celles illustrées sur les figures 7a à 7d.

De même, de la même façon que décrit précédemment, l'élément en saillie 15b et le plateau 33 sur la face d'appui 331 duquel il est aménagé, peuvent se présenter sous la forme d'une pièce monobloc. L'élément en saillie 15b peut au contraire être rapporté sur la face d'appui 331, lequel élément en saillie est alors maintenu en position sur ladite face d'appui par l'intermédiaire de moyens de fixation du type décrit précédemment.

Le logement 15c a des dimensions équivalentes à celles de l'élément en saillie 15b de manière à ce que celui-ci puisse s'insérer dans ledit logement 15c. Les dimensions du logement 15c sont toutefois préférentiellement supérieures à celles de l'élément en saillie 15b de façon à faciliter l'insertion de celui-ci. La forme du logement 15c est donc complémentaire de celle de l'élément en saillie 15b.

Le logement 15c est réalisé dans le corps 11 de l'opercule 1, formant une partie de moindre épaisseur. Il est préférentiellement réalisé pendant la fabrication de l'opercule 1, par exemple pendant un procédé de moulage. Il peut toutefois, être réalisé ultérieurement en utilisant, par exemple, un procédé d'usinage, de matriçage ou d'estampage.

Sur la figure 6c, le logement 15c est placé au milieu du corps 11, selon le plan médian transversal 14. Il est symétrique par rapport au plan médian transversal 14 de manière à être équidistant de la partie pleine 12 et de la partie percée 13. Il peut être également symétrique par rapport au plan médian longitudinal S.

Sur la figure 11, les plateaux 23, 33 sont en position écartée. L'espacement entre les faces d'appui 231, 331 est tel que l'opercule 1 peut être déplacé de la position d'ouverture à la position de fermeture, ou inversement. Dans cette position écartée, l'espacement entre les deux faces d'appui 231, 331 est supérieur à l'épaisseur combinée de l'élément en saillie 15b et du corps 11. On entend par « épaisseur du corps » 11, l'épaisseur de la partie du corps 11 ne présentant pas le logement 15c.

Les figures 12a et 12b décrivent l'obturateur avec les plateaux 23, 33 en position rapprochée. Sur la figure 12a, l'obturateur 1 est en position d'ouverture alors que sur la figure 12b, il est en position de fermeture. Les faces d'appui 231, 331 viennent en contact avec les faces longitudinales 111, 112 de l'opercule 1 de manière à maintenir ce dernier en position.

Dans le cas où l'opercule 1 est correctement positionné (figures 12a et 12b), l'élément en saillie 15b et le logement 15c sont centrés de sorte que ledit élément en saillie puisse s'insérer dans ledit logement 15c. Les plateaux 23, 33 peuvent alors être déplacés jusqu'à atteindre la position rapprochée, où ils enserrent le corps 11 de l'opercule 1. Dans cette configuration où l'élément en saillie 15b s'efface dans le logement 15c, l'espacement entre les faces d'appui 231, 331 correspond à l'épaisseur du corps 11. Le mécanisme de verrouillage peut alors être correctement verrouillé et maintenir les demi-corps 2, 3 dans cette position rapprochée.

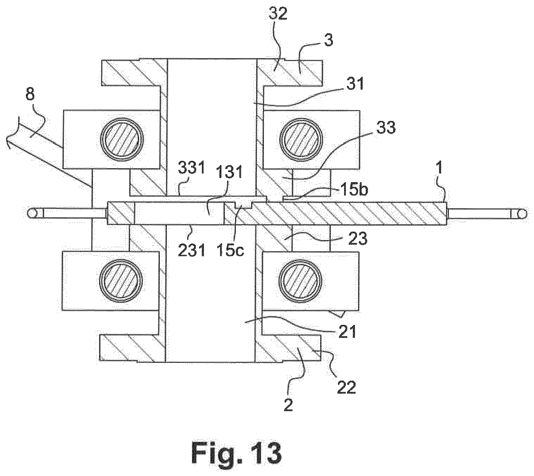

La figure 13 montre le cas où l'opercule 1 est mal positionné. L'élément en saillie 15b se retrouve excentré du logement 15c et vient buter contre la face longitudinale 111, formant un obstacle. L'espacement entre les deux faces d'appui 231, 331 est dans ce cas supérieur à l'épaisseur du corps 11, celui-ci n'étant, par conséquent, pas enserré entre lesdites faces d'appui. Le mécanisme de verrouillage ne peut alors pas être correctement verrouillé et maintenir les demi-corps 2, 3 dans cette position rapprochée, empêchant l'opérateur de fermer l'obturateur.

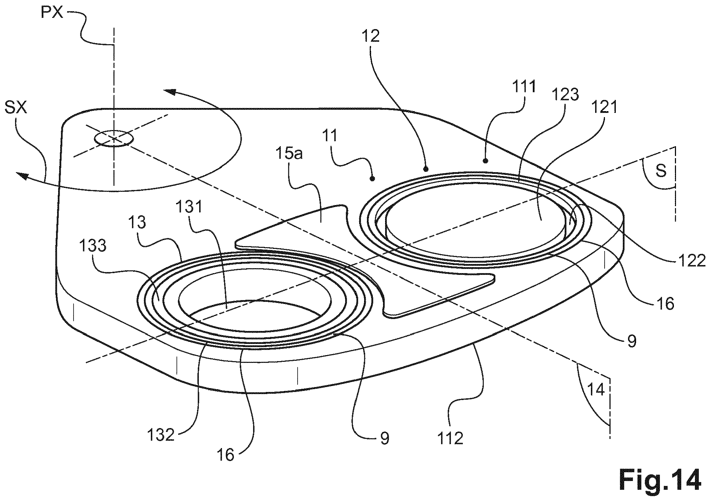

La figure 14 est une représentation schématique d'un obturateur 1 pivotant selon l'invention. L'obturateur 1 est déplaçable suivant une trajectoire curviligne SX entre ses positions ouverte et fermée. Ici, au moins l'opercule mobile 1 et / ou l'un des demi-corps 2, 3 possède au moins un élément saillant 15a de détrompage. Chaque élément saillant 15a de détrompage n'autorise un passage sécurisé d'une position (O : F) à l'autre, que si l'espacement entre deux demi-corps 2, 3 est suffisant.

Dans ces modes de réalisation, l'opercule 1 est monté pivotant suivant une direction de rotation courbe SX qui est étendue dans un plan perpendiculaire aux plans médian longitudinal S et plan médian transversal 14. Par suite, un axe géométrique de pivotement PX est perpendiculaire aux faces longitudinales 111, 112 du corps 11.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- l'emplacement 121 peut être présent sur une seule face 111, 112 de l'opercule 1. Ce mode de réalisation peut, par exemple, être utilisé en fin de conduite de fluide, pour raccorder un seul des brides 2, 3,
- les sections de l'ouverture 131 et de l'emplacement 121 peuvent être de forme différente à celle décrite précédemment. Ils peuvent, par exemple, présenter une section carrée ou encore rectangulaire,
- le mécanisme de verrouillage peut se présenter sous d'autres formes, comme par exemple un organe réducteur actionné par un volant solidaire d'un des arbres moteurs 4a, 4b,
- l'élément en saillie 15 peut se présenter sous d'autres formes que celles décrites. Il peut, par exemple, être sous la forme d'un cercle, une ellipse, ou encore un triangle,
- l'opercule 1 peut être coulissé entre les deux plateaux 23, 33, mais il peut aussi être monté pivotant,
- le logement 15c n'est pas forcément positionné au milieu du corps 11. Il peut être placé n'importe où, comme par exemple une des extrémités dudit corps 11.

En se reportant aux figures 10, 11, 12a et 12b, est exposé un exemple de procédé d'obturation sécurisé d'un obturateur 1 mobile pour canalisation de fluide.

Suivant une étape de position de défaut (D, figures 10 ou 11), chaque élément en saillie 15b est placé en regard d'une face (111, 112) à distance du logement 15c complémentaire, en s'opposant au rapprochement des corps 2, 3.

Suivant une étape d'ouverture (O, figure 12a), au moins un élément en saillie 15b est placé et effacé dans un logement 15c correspondant et de forme sensiblement complémentaire, ce qui permet le rapprochement des corps 2, 3 et le passage du fluide dans l'ouverture 131.

Suivant une étape de fermeture (F, figure 12b), au moins un élément en saillie 15b est placé et effacé dans un logement 15c correspondant et de forme sensiblement complémentaire, permettant aussi le rapprochement des corps 2, 3 pour que l'aménagement 121 ou voile plein, barre et interdise le passage du fluide.

## Revendications

1. Obturateur mobile pour canalisation de fluide comportant :
- deux demi-corps (2, 3) agencés de manière à former une canalisation de fluide, lesdits demi-corps (2, 3) étant chacun formés d'un tube (21, 31) formant canalisation et aux extrémités duquel sont fixés respectivement une bride (22, 32) et un plateau (23, 33), chacun desdits plateaux (23, 33) présentant une face d'appui (231, 331) et un espacement entre les deux demi-corps (2, 3),
- un opercule (1) se présentant sous la forme d'un corps (11) délimité par deux faces longitudinales planes opposées (111, 112) disposées chacune respectivement en vis-à-vis de la face d'appui (231, 331) des plateaux (23, 33), lequel opercule présente une partie pleine (12) et une partie percée (13) par une ouverture (131) débouchant au niveau de chacune desdites faces longitudinales, l'opercule (1) est monté mobile entre les faces d'appui (231, 331) dans l'espacement entre les deux demi-corps (2, 3) entre :
• une position de fermeture où la partie pleine (12) obture la canalisation de manière à interdire une circulation fluidique entre les deux demi-corps (2, 3),
• une position d'ouverture où la partie percée (13) est placée au centre de la canalisation de manière à autoriser une circulation fluidique entre les deux demi-corps (2, 3),
- un mécanisme de verrouillage adapté pour maintenir les plateaux (23, 33) dans :
• une position écartée où la face d'appui (231, 331) des plateaux (23, 33) est espacée de la face longitudinale (111, 112) respective de l'opercule (1), de manière à autoriser le déplacement dudit opercule entre les positions de fermeture et d'ouverture,
• une position rapprochée où les faces d'appui (231, 331) enserrent de manière étanche le corps (11) de l'opercule (1) pour bloquer ledit opercule en position d'ouverture ou de fermeture, lesdites faces d'appui venant chacune en contact serré avec la face longitudinale (111, 112) respective de l'opercule (1),
au moins un élément en saillie (15a, 15b) en matériau rigide étant aménagé sur au moins une face d'appui (231, 331) d'au moins un plateau (23, 33) ou sur au moins une des faces longitudinales (111, 112) du corps (11) de l'opercule (1), l'élément en saillie (15a, 15b) étant configuré de sorte que dans la position rapprochée, l'espacement entre les deux faces d'appuis (231, 331) des plateaux (23, 33) soit inférieur à l'épaisseur combinée dudit corps (11) et de l'élément en saillie (15a, 15b), de sorte que si l'opercule (1) n'est pas correctement positionné dans l'espacement entre les deux demi-corps (2, 3) en position de fermeture ou dans la position d'ouverture, l'élément en saillie (15a, 15b) forme un obstacle qui maintient éloignée la face d'appui (231, 331) d'au moins un plateau (23, 33) et la face longitudinale (111, 112) respective, et que le mécanisme de verrouillage ne peut pas maintenir les plateaux (23, 33) dans la position rapprochée enserrant de manière étanche le corps (11),
**caractérisé en ce que**, au moins lorsque les plateaux (23, 33) sont agencés dans ladite position rapprochée, ledit élément en saillie (15a, 15b) s'étend symétriquement par rapport au plan médian transversal (14) du corps (11) de l'opercule (1) de manière à être agencé à équidistance entre d'une part la partie pleine (12) et d'autre part la partie percée (13) dudit opercule (1).

2. Obturateur mobile selon la revendication 1,
**caractérisé en ce qu'**au moins un élément en saillie (15a) est aménagé sur au moins une des faces longitudinales (111, 112) du corps (11) de l'opercule (1), lequel élément en saillie est localisé entre la partie pleine (12) et la partie percée (13) dudit corps, de sorte que si ledit opercule est positionné de manière à ce que ledit élément en saillie soit situé dans l'espacement entre les deux faces d'appui (231, 331) des plateaux (23, 33), alors ledit élément en saille maintient un espacement entre la face longitudinale (111, 112) sur lequel il est disposé et la face d'appui (231, 331) respective.

3. Obturateur mobile selon l'une des revendications 1 ou 2,
**caractérisé en ce que** l'opercule (1) est monté coulissant entre les faces d'appui (231, 331) en glissant dans l'espacement entre les deux demi-corps (2, 3) suivant au moins une des faces longitudinales (111, 112) du corps (11) de l'opercule (1).

4. Obturateur mobile selon l'une des revendications 2 ou 3,
**caractérisé en ce que** l'opercule (1) est monté pivotant entre les faces d'appui (231, 331) en glissant dans l'espacement entre les deux demi-corps (2, 3).

5. Obturateur mobile selon l'une des revendications 2 à 4,
**caractérisé en ce que** l'élément en saillie (15a) est positionné au milieu du corps (11) de l'opercule (1).

6. Obturateur mobile selon l'une des revendications 2 à 5,
**caractérisé en ce que** l'élément en saillie (15a) est symétrique par rapport au plan médian longitudinal (S) du corps (11) de l'opercule (1).

7. Obturateur mobile selon l'une des revendications 2 à 6,
**caractérisé en ce que** l'élément en saillie (15a) présente une forme en sablier ayant deux cotés droits (151a, 152a) parallèles aux bords longitudinaux du corps (11) de l'opercule (1), lesquels côtés droits sont reliés pas deux cotés incurvés (153a, 154a).

8. Obturateur mobile selon l'une des revendications 2 à 6,
**caractérisé en ce que** l'élément en saillie (15a) se présente sous la forme d'une nervure transversale s'étendant dans toute la largeur du corps (11) de l'opercule (1), ou sensiblement dans toute la largeur dudit corps.

9. Obturateur mobile selon l'une des revendications 2 à 6,
**caractérisé en ce que** l'élément en saillie (15a) se présente sous la forme de plusieurs nervures alignées transversalement les unes par rapport aux autres, dans la largeur du corps (11) de l'opercule (1).

10. Obturateur mobile selon l'une des revendications 2 à 6,
**caractérisé en ce que** l'élément en saillie (15a) se présente sous la forme d'une nervure transversale située au milieu du corps (11) de l'opercule (1), ladite nervure ayant une longueur inférieure à la largeur dudit corps.

11. Obturateur mobile selon l'une des revendications 1 à 10,
**caractérisé en ce qu'**au moins un élément en saillie (15a) se présente sous la forme d'une pièce monobloc avec et le corps (11) de l'opercule (1) ou avec au moins un plateau (23, 33) d'au moins un demi-corps (2, 3).

12. Obturateur mobile selon l'une des revendications 1 à 10,
**caractérisé en ce qu'**au moins un élément en saillie (15a) est rapporté sur le corps (11) de l'opercule (1) ou sur au moins un plateau (23, 33) d'au moins un demi-corps (2, 3), lequel élément en saillie est maintenu en position sur ledit corps (11) ou plateau (23, 33) par l'intermédiaire de moyens de fixation.

13. Obturateur mobile selon la revendication 1,
**caractérisé en ce qu'**au moins un élément en saillie (15b) est aménagé sur au moins une face d'appui (231, 331) d'au moins un des plateaux (23, 33), un logement (15c) de forme correspondante audit élément en saillie étant aménagé sur la face longitudinale respective (111, 112) du corps (11) de l'opercule (1), de manière à ce que si ledit élément en saillie n'est pas positionné dans ledit logement, alors ledit élément en saillie forme l'obstacle.

14. Obturateur mobile selon la revendication 13,
**caractérisé en ce que** l'obturateur comprend au moins un élément en saillie (15b) sous la forme d'une pièce monobloc aménagé par moulage, estampage, ou usinage et / ou au moins un l'élément en saillie (15b) rapporté qui est maintenu en position par l'intermédiaire de colle, soudure ou vis.

15. Installation (INS) de traitement de fluide comportant au moins une canalisation de fluide (PIP), **caractérisée en ce que** l'installation (INS) comprend au moins un obturateur mobile (1) selon l'une des revendications 1 à 14.

16. Procédé d'obturation sécurisé d'un obturateur (1) mobile pour canalisation de fluide (PIP), selon l'une des revendications 1 à 14,
**caractérisé en ce que**
• suivant une étape de position de défaut (D), chaque élément en saillie (15b) est placé en regard d'une face (111, 112) complémentaire et s'oppose au rapprochement des corps (2, 3);
• suivant une étape d'ouverture (O), au moins un élément en saillie (15b) est placé et effacé de façon à permettre le rapprochement des corps (2, 3) et le passage du fluide dans l'ouverture (131) ; et
• suivant une étape de fermeture (F), au moins un élément en saillie (15b) est placé et effacé de façon à permettre le rapprochement des corps (2, 3) pour que l'aménagement (121) ou voile plein, interdise le passage du fluide.

## Patentansprüche

1. Beweglicher Verschluss für eine Fluidleitung, umfassend:
- zwei Halbkörper (2, 3), die angeordnet sind, um eine Fluidleitung zu bilden, wobei die Halbkörper (2, 3) jeweils durch ein Rohr (21, 31) gebildet sind, das eine Leitung bildet und an dessen Enden jeweils ein Flansch (22, 32) und eine Platte (23, 33) befestigt sind, wobei jede der Platten (23, 33) eine Auflagefläche (231, 331) und einen Abstand zwischen den beiden Halbkörpern (2, 3) aufweist,
- einen Schieber (1) in Form eines Körpers (11), der durch zwei gegenüberliegende ebene Längsflächen (111, 112) begrenzt ist, die jeweils gegenüber der Auflagefläche (231, 331) der Platten (23, 33) angeordnet sind, wobei der Schieber einen massiven Teil (12) und einen von einer zu jeder der Längsseiten offene Öffnung (131) durchbrochenen Teil (13) aufweist, wobei der Schieber (1) zwischen den Auflageflächen (231, 331) im Abstand zwischen den beiden Halbkörpern (2, 3) zwischen
• einer Schließposition, in der der massive Teil (12) das Rohr so schließt, dass eine Fluidzirkulation zwischen den beiden Halbkörpern (2, 3) verhindert wird,
• einer Öffnungsposition, in der das durchbohrte Teil (13) in der Mitte des Rohres so angeordnet ist, dass ein Fluidstrom zwischen den beiden Halbkörpern (2, 3) möglich ist,
beweglich montiert ist,
- einen Verriegelungsmechanismus, der eingerichtet ist zum Halten der Platten (23, 33) in:
• einer beabstandeten Position, in der die Auflagefläche (231, 331) der Schalen (23, 33) von der jeweiligen Längsfläche (111, 112) des Schiebers (1) beabstandet ist, so dass sich der Schieber zwischen der Schließ- und Öffnungsposition bewegen kann,
• einer angenäherten Position, in der die Auflageflächen (231, 331) den Körper (11) des Schiebers (1) abdichten, um den Schieber in der offenen oder geschlossenen Position zu verriegeln, wobei die Auflageflächen jeweils in engen Kontakt mit der jeweiligen Längsfläche (111, 112) des Schiebers (1) kommen,
wobei mindestens ein vorstehendes Element (15a, 15b) aus starrem Material auf mindestens einer Auflagefläche (231, 331) mindestens einer Platte (23, 33) oder auf mindestens einer der Längsseiten (111, 112) des Körpers (11) des Schiebers (1) angeordnet ist, wobei das vorstehende Element (15a, 15b) so konfiguriert ist, dass in der angenäherten Position
der Abstand zwischen den beiden Auflageflächen (231, 331) der Platten (23, 33) kleiner ist als die kombinierte Dicke des Körpers (11) und des vorstehenden Elements (15a, 15b), so dass, wenn die Abdeckung (1) im Zwischenraum zwischen den beiden Halbkörpern (2, 3) nicht korrekt in der geschlossenen Position oder in der offenen Position positioniert ist, das vorstehende Element (15a, 15b) ein Hindernis bildet, das die Auflagefläche (231, 331) von mindestens einer Platte (23, 33) und der jeweiligen Längsfläche (111, 112) beabstandet hält, und der Verriegelungsmechanismus die Platten (23, 33) nicht in so der angenäherten Position halten kann, dass sie den Körper (11) dicht einspannen,
**dadurch gekennzeichnet, dass** sich das vorstehende Element (15a, 15b) zumindest dann, wenn die Platten (23, 33) in der angenäherten Position angeordnet sind, symmetrisch zur Quermittelebene (14) des Körpers (11) des Schiebers (1) erstreckt, um äquidistant zwischen dem massiven Teil (12) und dem durchbrochenen Teil (13) des Schiebers (1) angeordnet zu sein.

2. Beweglicher Verschluss nach Anspruch 1, **dadurch gekennzeichnet, dass** mindestens ein vorstehendes Element (15a) auf mindestens einer der Längsseiten (111, 112) des Körpers (11) des Schiebers (1) angeordnet ist, wobei sich das vorstehende Element zwischen dem massiven Teil (12) und dem durchbrochenen Teil (13) des Körpers befindet, so dass, wenn der Schieber so positioniert ist, dass sich das vorstehende Element im Zwischenraum zwischen den beiden Auflageflächen (231, 331) der Platten (23, 33) befindet, das vorstehende Element einen Zwischenraum zwischen der Längsfläche (111, 112), auf der es angeordnet ist, und der jeweiligen Auflagefläche (231, 331) offenhält.

3. Beweglicher Verschluss nach einem der Ansprüche 1 oder 2, **dadurch gekennzeichnet, dass** der Schieber (1) zwischen den Auflageflächen (231, 331) verschiebbar und in dem Zwischenraum zwischen den beiden Halbkörpern (2, 3) entlang mindestens einer der Längsflächen (111, 112) des Körpers (11) des Schiebers (1) gleitend gelagert ist.

4. Beweglicher Verschluss nach einem der Ansprüche 2 oder 3, **dadurch gekennzeichnet, dass** der Schieber (1) zwischen den Auflageflächen (231, 331) schwenkbar und in dem Zwischenraum zwischen den beiden Halbkörpern (2, 3) gleitend gelagert ist.

5. Beweglicher Verschluss nach einem der Ansprüche 2 bis 4, **dadurch gekennzeichnet, dass** das vorstehende Element (15a) in der Mitte des Körpers (11) des Schiebers (1) positioniert ist.

6. Beweglicher Verschluss nach einem der Ansprüche 2 bis 5, **dadurch gekennzeichnet, dass** das vorstehende Element (15a) symmetrisch zur Längsmittelebene (S) des Körpers (11) des Schiebers (1) ist.

7. Beweglicher Verschluss nach einem der Ansprüche 2 bis 6, **dadurch gekennzeichnet, dass** das vorstehende Element (15a) eine Sanduhrform mit zwei zu den Längskanten des Körpers (11) des Schiebers (1) parallelen geraden Seiten (151a, 152a) aufweist, wobei diese geraden Seiten durch zwei gekrümmte Seiten (153a, 154a) verbunden sind.

8. Beweglicher Verschluss nach einem der Ansprüche 2 bis 6, **dadurch gekennzeichnet, dass** das vorstehende Element (15a) in Form einer Querrippe ausgebildet ist, die sich über die gesamte Breite des Körpers (11) des Schiebers (1) oder im Wesentlichen über die gesamte Breite des Körpers erstreckt.

9. Beweglicher Verschluss nach einem der Ansprüche 2 bis 6, **dadurch gekennzeichnet, dass** das vorstehende Element (15a) in Form einer Mehrzahl von Rippen ausgebildet ist, die über die Breite des Körpers (11) des Schiebers (1) quer zueinander ausgerichtet sind.

10. Beweglicher Verschluss nach einem der Ansprüche 2 bis 6, **dadurch gekennzeichnet, dass** das vorstehende Element (15a) in Form einer Querrippe ausgebildet ist, die sich in der Mitte des Körpers (11) des Schiebers (1) befindet, wobei die Rippe eine Länge aufweist, die kleiner als die Breite des Körpers ist.

11. Beweglicher Verschluss nach einem der Ansprüche 1 bis 10, **dadurch gekennzeichnet, dass** mindestens ein vorstehendes Element (15a) in Form eines mit dem Körper (11) des Schiebers (1) oder mit mindestens einer Platte (23, 33) mindestens eines Halbkörpers (2, 3) einteiligen Teils vorliegt.

12. Beweglicher Verschluss nach einem der Ansprüche 1 bis 10, **dadurch gekennzeichnet, dass** mindestens ein vorstehendes Element (15a) am Körper (11) des Schiebers (1) oder an mindestens einer Platte (23, 33) mindestens eines Halbkörpers (2, 3) befestigt ist, das an dem Körper (11) oder der Platte (23, 33) durch Befestigungsmittel in Position gehalten wird.

13. Beweglicher Verschluss nach Anspruch 1, **dadurch gekennzeichnet, dass** mindestens ein vorstehendes Element (15b) auf mindestens einer Auflagefläche (231, 331) mindestens einer der Platten (23, 33) angeordnet ist, wobei eine Aufnahme (150) mit dem vorstehenden Element entsprechender Form auf der jeweiligen Längsfläche (111, 112) des Körpers (11) des Verschlusses (1) angeordnet ist, so dass, wenn das vorstehende Element nicht in der Aufnahme positioniert ist, das vorstehende Element das Hindernis bildet.

14. Beweglicher Verschluss nach Anspruch 13, **dadurch gekennzeichnet, dass** der Verschluss mindestens ein vorstehendes Element (15b) in Form eines durch Abformen, Stanzen oder Zerspanen gebildeten einstückigen Teils und/oder mindestens ein angefügtes vorstehendes Element (15b) umfasst, das mittels Kleben, Schweißen oder Schrauben in Position gehalten ist.

15. Fluidbehandlungsanlage (INS) mit mindestens einer Fluidleitung (PIP), **dadurch gekennzeichnet, dass** die Anlage (INS) mindestens einen beweglichen Verschluss (1) nach einem der Ansprüche 1 bis 14 umfasst.

16. Verfahren zum sicheren Abdichten eines beweglichen Fluidleitungsverschlusses (1) nach einem der Ansprüche 1 bis 14, **dadurch gekennzeichnet, dass**
• nach einem Fehlerpositionierungsschritt (D) jedes vorstehende Element (15b) gegenüber einer komplementären Fläche (111, 112) platziert ist und sich der Annäherung der Körper (2, 3) entgegenstellt;
• nach einem Öffnungsschritt (O) mindestens ein vorstehendes Element (15b) angeordnet und versenkt ist, um eine Annäherung der Körper (2, 3) aneinander und den Durchgang des Fluids durch die Öffnung (131) zu ermöglichen; und
• nach einem Schließschritt (F) mindestens ein vorstehendes Element (15b) so platziert und versenkt ist, um eine Annäherung der Körper (2, 3) aneinander zu ermöglichen, wobei die Anordnung (121) des massiven Teils den Durchgang des Fluids verhindert.

## Claims

1. Movable plug for a fluid pipe, comprising:
- two half-bodies (2, 3) arranged so as to form a fluid pipe, said half-bodies (2, 3) each being formed by a tube (21, 31) forming a pipe and at the ends of which tube are attached a flange (22, 32) and a plate (23, 33), respectively, each of said plates (23, 33) having a bearing surface (231, 331) and a gap between the two half-bodies (2, 3),
- a seal (1) in the form of a body (11) delimited by two opposing planar longitudinal surfaces (111, 112) each arranged facing the bearing surface (231, 331) of the plates (23, 33), respectively, which seal has a solid part (12) and a bored part (13) through which an opening (131) extends that opens into each of said longitudinal surfaces; the seal (1) is mounted between the bearing surfaces (231, 331) in the gap between the two half-bodies (2, 3) so as to be movable between:
• a closed position in which the solid part (12) blocks the pipe so as to prevent fluid flow between the two half-bodies (2,3),
• an open position in which the bored part (13) is placed in the centre of the pipe so as to allow fluid flow between the two half-bodies (2, 3),
- a locking mechanism for holding the plates (23, 33) in:
• a spaced-apart position in which the bearing surface (231, 331) of the plates (23, 33) is spaced apart from the relevant longitudinal surface (111, 112) of the seal (1), so as to allow said seal to move between the closed and open positions,
• a close position in which the bearing surfaces (231, 331) enclose the body (11) of the seal (1) in a sealed manner in order to lock said seal in the open position or the closed position, said bearing surfaces each coming into clamped contact with the relevant longitudinal surface (111, 112) of the seal (1),
at least one projecting element (15a, 15b) made of a stiff material being provided on at least one bearing surface (231, 331) of at least one plate (23, 33) or on at least one of the longitudinal surfaces (111, 112) of the body (11) of the seal (1), the projecting element (15a, 15b) being designed such that, in the close position, the gap between the two bearing surfaces (231, 331) of the plates (23, 33) is smaller than the combined thickness of said body (11) and the projecting element (15a, 15b) such that, if the seal (1) is not correctly positioned in the gap between the two half-bodies (2, 3) in the closed position or in the open position, the projecting element (15a, 15b) forms an obstruction which holds the bearing surface (231, 331) away from at least one plate (23, 33) and the relevant longitudinal surface (111, 112), and such that the locking mechanism cannot hold the plates (23, 33) in the close position in which they enclose the body (11) in a sealed manner,
**characterised in that**, at least when the plates (23, 33) are arranged in said close position, said projecting element (15a, 15b) extends symmetrically with respect to the transverse median plane (14) of the body (11) of the seal (1) so as to be arranged equidistantly between the solid part (12) and the bored part (13) of said seal (1).

2. Movable plug according to claim 1, **characterised in that** at least one projecting element (15a) is provided on at least one of the longitudinal surfaces (111, 112) of the body (11) of the seal (1), which projecting element is located between the solid part (12) and the bored part (13) of said body such that, if said seal is positioned such that said projecting element is in the gap between the two bearing surfaces (231, 331) of the plates (23, 33), said projecting element maintains a gap between the longitudinal surface (111, 112) on which it is arranged and the relevant bearing surface (231, 331).

3. Movable plug according to either claim 1 or claim 2, **characterised in that** the seal (1) is slidably mounted between the bearing surfaces (231, 331) by sliding into the gap between the two half-bodies (2, 3) along at least one of the longitudinal surfaces (111, 112) of the body (11) of the seal (1).

4. Movable plug according to either claim 2 or claim 3, **characterised in that** the seal (1) is pivotally mounted between the bearing surfaces (231, 331) by sliding into the gap between the two half-bodies (2, 3).

5. Movable plug according to any of claims 2 to 4, **characterised in that** the projecting element (15a) is positioned in the centre of the body (11) of the seal (1).

6. Movable plug according to any of claims 2 to 5, **characterised in that** the projecting element (15a) is symmetrical with respect to the longitudinal median plane (S) of the body (11) of the seal (1).

7. Movable plug according to any of claims 2 to 6, **characterised in that** the projecting element (15a) has an hourglass shape having two straight sides (151a, 152a) parallel to the longitudinal edges of the body (11) of the seal (1), which straight sides are connected by two curved sides (153a, 154a).

8. Movable plug according to any of claims 2 to 6, **characterised in that** the projecting element (15a) is in the form of a transverse rib extending over the entire width of the body (11) of the seal (1), or substantially over the entire width of said body.

9. Movable plug according to any of claims 2 to 6, **characterised in that** the projecting element (15a) is in the form of a plurality of ribs aligned transversally to one another over the width of the body (11) of the seal (1).

10. Movable plug according to any of claims 2 to 6, **characterised in that** the projecting element (15a) is in the form of a transverse rib located in the centre of the body (11) of the seal (1), said rib having a length that is smaller than the width of said body.

11. Movable plug according to any of claims 1 to 10, **characterised in that** at least one projecting element (15a) is formed in a single piece with the body (11) of the seal (1) or with at least one plate (23, 33) of at least one half-body (2, 3).

12. Movable plug according to any of claims 1 to 10, **characterised in that** at least one projecting element (15a) is added onto the body (11) of the seal (1) or onto at least one plate (23, 33) of at least one half-body (2, 3), which projecting element is held in position on said body (11) or plate (23, 33) by attachment means.

13. Movable plug according to claim 1, **characterised in that** at least one projecting element (15b) is provided on at least one bearing surface (231, 331) of at least one of the plates (23, 33), a housing (15c) that has a shape corresponding to said projecting element being provided on the relevant longitudinal surface (111, 112) of the body (11) of the seal (1) such that, if said projecting element is not positioned in the housing, said projecting element forms the obstruction.

14. Movable plug according to claim 13, **characterised in that** the plug includes at least one projecting element (15b) which is formed in one piece and provided by moulding, stamping or machining and/or at least one added projecting element (15b) which is held in position by means of adhesive, welded joint or screw.

15. Fluid processing plant (INS) comprising at least one fluid pipe (PIP), **characterised in that** the plant (INS) includes at least one movable plug (1) according to any of claims 1 to 14.

16. Method for sealing a movable plug (1), according to any of claims 1 to 14, for a fluid pipe (PIP) in a secured manner, **characterised in that**
- following a default position step (D), each projecting element (15b) is placed facing a complementary surface (111, 112) and prevents the bodies (2, 3) from moving towards each other;
- following an opening step (O), at least one projecting element (15b) is placed and retracted so as to allow the bodies (2, 3) to move towards each other and the fluid to pass through the opening (131); and
- following a closing step (F), at least one projecting element (15b) is placed and retracted so as to allow the bodies (2, 3) to move towards each other such that the solid arrangement (121) or covering prevents the passage of fluid.
